# EUROPÄISCHE PATENTANMELDUNG

(11) **EP 2 397 720 A2**
(43) Veröffentlichungstag der Anmeldung: **21.12.2011**
(21) Anmeldenummer: 11162152.0
(22) Anmeldetag: 13.04.2011
(51) Int. Cl.: F16F 15/26

(54) **Brennkraftmaschine**

(30) Priorität: 18.06.2010 DE 102010030271
(71) Anmelder: Bayerische Motoren Werke Aktiengesellschaft, 80809 München (DE)
(72) Erfinder: Gutzer, Ulrich, Dr., 80937 München (DE)

(57) **Zusammenfassung**

Brennkraftmaschine (100) mit einem ersten Zylinder (102) und einem zu diesem In Reihe angeordneten zweiten Zylinder (104), einer Kurbelwelle (110) mit einem ersten, zwischen zwei ersten Hubwangen (128) angeordneten Hubzapfen und einem zweiten, zwischen zwei zweiten Hubwangen (132) angeordneten Hubzapfen, wenigstens einer Nockenwelle (114) sowie einer ausgehend von der Kurbelwelle angetriebenen Massenausgleichseinrichtung (101), wobei der kurbelwellenseitige Antrieb der Massenausgleichseinrichtung zwischen den ersten Hubwangen und den zweiten Hubwangen angeordnet ist, um einen effektiven Massenausgleich bei gleichzeitiger Bauraumoptimierung zu ermöglichen.

## Beschreibung

Die Erfindung betrifft eine Brennkraftmaschine mit einem ersten Zylinder und einem zu diesem in Reihe angeordneten zweiten Zylinder, einer Kurbelwelle mit einem ersten, zwischen zwei ersten Hubwangen angeordneten Hubzapfen und einem zweiten, zwischen zwei zweiten Hubwangen angeordneten Hubzapfen, wenigstens einer Nockenwelle sowie einer ausgehend von der Kurbelwelle angetriebenen Massenausgleichseinrichtung.

Aus der DE 27 35 384 C2 ist ein Zweizylinder-Reihenmotor mit umlaufenden Massen zweier Ausgleichsvarrichtungen bekannt. Bei diesem Motor erfolgt ein Antrieb der Ausgleichsvorrichtung ausgehend von einer Kurbelwelle des Motors mittels eines Zahnrads, das endseitig, axial außerhalb der Hauptlager, an der Kurbelwelle angeordnet ist. Mittels des kurbelwellenseitigen Zahnrads wird zunächst eine erste Ausgleichswelle mit endseitig angeordnetem Zahnrad angetrieben, die ihrerseits eine zweite Ausgleichswelle mit endseitig angeordnetem Zahnrad antreibt. Diese bekannte Anordnung erfordert sowohl in Motorslängsrichtung als auch in der Höhe einen beträchtlichen Bauraum

Aufgabe der Erfindung ist es daher, eine eingangs genannte Brennkraftmaschine bereit zu stellen, die einen effektiven Massenausgleich bei gleichzeitiger Bauraumoptimierung ermöglicht.

Die Lösung der Aufgabe erfolgt mit einer Brennkraftmaschine mit den Merkmalen des Anspruchs 1, indem der kurbeiwellenseitige Antrieb der Massenausgleichseinrichtung zwischen den ersten Hubwangen und den zweiten Hubwangen angeordnet ist. Damit wird, insbesondere in axialer Richtung, eine besonders kompakte Bauform erreicht. Aufgrund der zumindest annähernd symmetrischen Anordnung ergibt sich ein besonders effektiver Massenausgleich.

Besonders zu bevorzugende Ausführungen und Weiterbildungen der Erfindung sind Gegenstand der Unteransprüche.

Vorzugsweise sind der erste Hubzapfen und der zweite Hubzapfen bezüglich der Kurbelwellenachse um 90° zueinander versetzt, und die Massenausgleichseinrichtung umfasst eine erste Ausgleichswelle und eine zweite Ausgleichswelle. Mit zwei Ausgleichswellen ist gerade bei einer 90°-Kröpfung der Kurbelwelle ein besonders effektiver Massenausgleich gegeben, da bei einer derartigen Anordnung sowohl Massenkräfte 1. Ordnung als auch Massenkräfte 2. Ordnung auszugleichen sind.

Einer vorteilhaften Ausführung zufolge drehen die erste Ausgleichswelle und die zweite Ausgleichswelle gegensinnig zueinander. Einer anderen, ebenfalls als vorteilhaft angesehenen Ausführung zufolge, drehen die erste Ausgleichswelle und die zweite Ausgleichswelle gleichsinnig zueinander und beide entgegen der Kurbelwelle. Einem noch anderen Ausführungsbeispiel drehen die erste Ausgleichswelle und die zweite Ausgleichswelle gleichsinnig zueinander und beide in dieselbe Richtung wie die Kurbelwelle.

Sehr zweckmäßig ist es, wenn der Antrieb der Massenausgleichseinrichtung ein kurbelwellenseitiges Antriebsrad, ein der wenigstens einen Nockenwellen zugeordnetes Antriebsrad, wenigstens ein der Massenausgleichseinrichtung zugeordnetes Antriebsrad sowie ein Zugmittel umfasst.

Bevorzugterweise ist jeweils die dem Antrieb der Massenausgleichseinrichtung zugewandte Hubwange der ersten Hubwangen und der zweiten Hubwangen bezogen auf die anderen Hubwangen schmal ausgeführt.

Die erfindungsgemäße Brennkraftmaschine ist in besonderem Maße als Range Extender zur Verlängerung der Reichweite eines elektrisch betreibbaren Fahrzeugs geeignet und bestimmt.

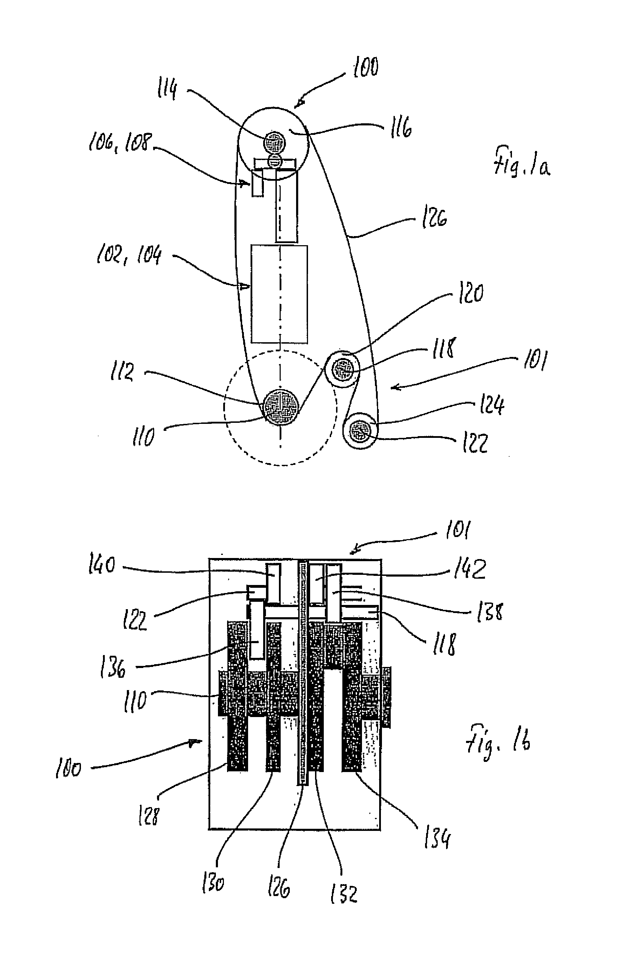

Nachfolgend ist ein besonders zu bevorzugendes Ausführungsbeispiel der Erfindung unter Bezugnahme auf Figuren näher erläutert, dabei zeigen schematisch und beispielhaft
- Figur 1a: eine Zweizylinder-Reihenbrannkraftmaschine mit zwei ausgehend von einem zwischen den Zylindern liegenden Kurbelwellenbereich gegenläufig zueinander angetriebenen Ausgleichswellen in stirnseitiger Schnittansicht,
- Figur 1: b eine Zweizylinder-Reihenbrennkraftmaschine mit zwei ausgehend von einem zwischen den Zylindern liegenden Kurbelwellenbereich gegenläufig zueinander angetriebenen Ausgleichswellen in Schnittansicht von oben,
- Figur 2a: eine Zweizylinder-Reihenbrennkraftmaschine mit zwei ausgehend von einem zwischen den Zylindern liegenden Kurbelwellenbereich gleichläufig zueinander angetriebenen Ausgleichswellen in stirnseitiger Schnittansicht und
- Figur 2b: eine Zweizylinder-Reihenbrennkrafimaschine mit zwei ausgehend von einem zwischen den Zylindern liegenden Kurbelwellenbereich gleichläufig zueinander angetriebenen Ausgleichswellen in Schnittansicht von oben.

Figur 1a zeigt ein Ausführungsbeispiel einer erfindungsgemäßen Zweizylinder-Reihenbrennkraftmaschine 100 in stirnseitiger Schnittansicht, eine Schnittansicht von oben ist in Figur 1b dargestellt. Die Brennkraftmaschine umfasst zwei in Reihe angeordnete Zylinder 102, 104. Den Zylindern 102, 104 sind hier nicht dargestellte Kolben zugeordnet, die jeweils mittels eines Pleuels mit Hubzapfen der Kurbelwelle 110 verbunden sind. Die Hubzapfen der Kurbelwelle 110 sind bezogen auf die Kurbelwellenachse zueinander um 90° versetzt, sodass die Kolben entsprechend versetzt getaktet sind. Der Hubzapfen des ersten Zylinders 102 ist zwischen Kurbelwangen 128, 130 angeordnet, der Hubzapfen des zweiten Zylinders 104 ist zwischen Kurbelwangen 132, 134 angeordnet.

Um beim Betrieb der Brennkraftmaschine die Wirkung von Massenkräften nach außen zu kompensieren, ist eine Massenausgleichseinrichtung 101 vorgesehen, die vorliegend zwei Ausgleichswellen 118, 122 umfasst. Ein Antrieb der Massenausgleichseinrichtung 101 erfolgt ausgehend von der Kurbelwelle mittels eines kurbelwellenfesten Zahnrads 112. Mit der Ausgleichswelle 118 ist ein Zahnrad 120 fest verbunden, mit der Ausgleichswelle 122 lst ein Zahnrad 124 fest verbunden. Eine Kette 126 verbindet die ausgleichswellenseitigen Zahnräder 120, 124 antriebsmäßig mit dem kurbelwellenfesten Zahnrad 112. Außerdem korrespondiert die Kette 126 mit einem Zahnrad 116 einer Nockenwelle 114 der Brennkraftmaschine. Die Nockenwelle 114 ist Teil eines ventiltriebs 106, 108 der Zylinder 102, 104.

In der Figur ist nur eine Nockenwelle 114 dargestellt, die Brennkraftmaschine kann jedoch auch zwei Nockenwellen aufweisen. Im vorliegenden Ausführungsbeispiel sind die Antriebsräder Kettenräder und das Zugmittel ist eine Kette. Einem anderen Ausführungsbeispiel zufolge kann jedoch auch ein anderes Zugmittel, beispielsweise ein Riemen, mit entsprechenden Antriebsrädern verwendet werden.

Die Ausgleichswelle 118 weist vorliegend zwei Ausgleichsmassen 136, 138 auf, wobei einem anderen Ausführungsbeispiel zufolge auch nur eine oder mehr als zwei Ausgleichsmassen vorgesehen sein können. Die Ausgleichswelle 122 weist vorliegend zwei Ausgleichsmassen 140, 142 auf, wobei einem anderen Ausführungsbeispiel zufolge auch nur eine oder mehr als zwei Ausgleichsmassen vorgesehen sein können. Die Ausgleichswellen 118, 122 sind im unteren Bereich der Brennkraftmaschine 100 parallel zur Kurbelwelle 110 angeordnet.

Wie aus Fig. 1a ersichtlich, liegen die beiden Ausgleichswellen 118, 122 auf einer Seite der Kurbelwelle 110 und sind von der Kette 126 derart umschlungen, dass sei beim Betrieb der Brennkraftmaschine gegenläufig zueinander angetrieben sind. In axialer Richtung liegen die Ausgleichsmassen 140, 42 der Ausgleichswelle 122 zwischen den Ausgleichsmassen 136,138 derAusgleichswelfe 118. Die Ausgleichsmasse 136 der Ausgleichswelle 118 ist zwischen den Kurbelwangen 128, 130 angeordnet, die Ausgleichsmasse 138 der Ausgleichswelle 118 ist zwischen den Kurbelwangen 132, 134 angeordnet.

Das Zahnrad 112 ist an der Kurbelwelle 110 axial zwischen der Kurbelwange 130 und der Kurbelwange 132 angeordnet. Das Zahnrad 120 ist an der Ausgleichswelle 118 axial zwischen den Ausgleichsmassen 136,138 angeordnet. Das Zahnrad 124 ist an der Ausgleichswelle 122 axial zwischen den Ausgleichsmassen 140, 142 angeordnet. Damit ist der Antrieb der Massenausgleichseinrichtung 101 bezogen auf die Achsen der Kurbelwelle 110, der Ausgleichswelle 118 und der Ausgleichswelle 122 zumindest annähernd axial mittig angeordnet. Um Raum für den Antrieb der Massenausgleichseinrichtung 101 zu schaffen, sind die benachbarten Kurbelwangen 130, 132 vergleichsweise schmal, insbesondere schmäler, als die Kurbelwangen 128, 134, ausgeführt. Damit sind die Zylinder 102, 104 in Kurbelwellenachsrichtung zumindest nicht wesentlich weiter voneinander beabstandet, als bei einer Brennkraftmaschine mit einem stirnseitigen Antrieb einer Massenausgleichseinrichtung.

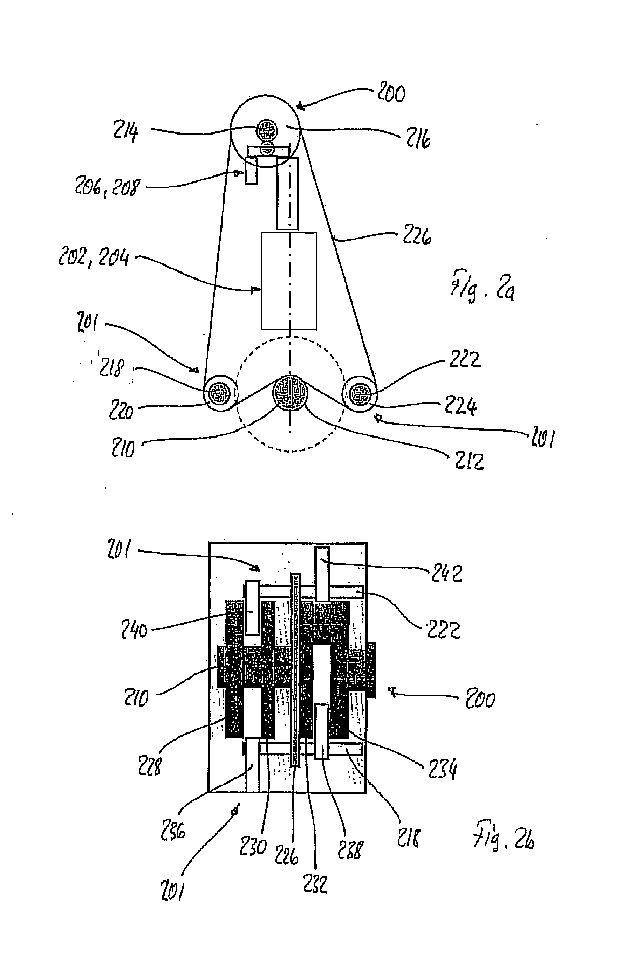

Figur 2a zeigt ein weiteres Ausführungsbeispiel einer erfindungsgemäßen Zweizylinder-Reihenbrennkraftmaschine 200 in stirnseitiger Schnittansicht, eine Schnittansicht von oben ist in Figur 2b dargestellt. Die Brennkraftmaschine umfasst zwei in Reihe-angeordnete Zylinder 202, 204. Den Zylindern 202, 204 sind hier nicht dargestellte Kolben zugeordnet, die jeweils mittels eines Pleuels mit Hubzapfen der Kurbelwelle 210 verbunden sind. Die Hubzapfen der Kurbelwelle 210 sind bezogen auf die Kurbelwellenachse zueinander um 90° versetzt, sodass die Kolben entsprechend versetzt getaktet sind. Der Hubzapfen des ersten Zylinders 202 ist zwischen Kurbelwangen 228, 230 angeordnet, der Hubzapfen des zweiten Zylinders 204 ist zwischen Kurbelwangen 232, 234 angeordnet.

Um beim Betrieb der Brennkraftmaschine die Wirkung von Massenkräften nach außen zu kompensieren, ist eine Massenausgleichseinrichtung 201 vorgesehen, die vorliegend zwei Ausgleichswellen 218, 222 umfasst. Ein Antrieb der Massenausgleichseinrichtung 201 erfolgt ausgehend von der Kurbelwelle mittels eines kurbeiwellenfesten Zahnrads 212. Mit der Ausgleichswelle 218 ist ein Zahnrad 220 fest verbunden, mit der Ausgleichswelle 222 ist ein Zahnrad 224 fest verbunden. Eine Kette 226 verbindet die ausgleichswellenseitigen Zahnräder 220, 224 antriebsmäßig mit dem kurbelwellenfesten Zahnrad 212. Außerdem korrespondiert die Kette 226 mit einem Zahnrad 216 einer Nockenwelle 214 der Brennkraftmaschine. Die Nockenwelle 214 ist Teil eines Ventiltriebs 206, 208 der Zylinder 202, 204

In der Figur ist nur eine Nockenwelle 214 dargestellt, die Brennkraftmaschine kann jedoch auch zwei Nockenwellen aufweisen. Im vorliegenden Ausführungsbeispiel sind die Antriebsräder Kettenräder und das Zugmittel ist eine Kette. Einem anderen Ausführungsbeispiel zufolge kann jedoch auch ein anderes Zugmittel, beispielsweise ein Riemen, mit entsprechenden Antriebsrädern verwendet werden.

Die Ausgleichswelle 218 weist vorliegend zwei Ausgleichsmassen 236, 238 auf, wobei einem anderen Ausführungsbeispiel zufolge auch nur eine oder mehr als zwei Ausgleichsmassen vorgesehen sein können. Die Ausgleichswelle 222 weist vorliegend zwei Ausgleichsmassen 240, 242 auf, wobei einem anderen Ausführungsbeispiel zufolge auch nur eine oder mehr als zwei Ausgleichsmassen vorgesehen sein können. Die Ausgleichswellen 218, 222 sind im unteren Bereich der Brennkraftmaschine 200 parallel zur Kurbelwelle 210 angeordnet.

Wie aus Fig. 2a ersichtlich, liegt die Ausgleichswelle 218 auf einer Seite der Kurbelwelle 210 und die Ausgleichswelle 222 liegt auf der anderen Seite der Kurbelwelle 210. Die Ausgleichswellen 218, 222 sind von der Kette 226 derart umschlungen, dass sei beim Betrieb der Brennkraftmaschine gleichläufig zueinander angetrieben sind. In axialer Richtung liegen die Ausgleichsmasse 240 der Ausgleichswelle 222 und die Ausgleichsmasse 236 der Ausgleichswelle 218 zwischen den Kurbelwangen 228 und 230. Die Ausgleichsmasse 242 der Ausgleichswelle 222 und die Ausgleichsmasse 238 der Ausgleichswelle 218 ist zwischen den Kurbelwangen 228 und 230 angeordnet.

Das Zahnrad 212 ist an der Kurbelwelle 210 axial zwischen der Kurbelwange 230 und der Kurbelwange 232 angeordnet. Das Zahnrad 220 ist an der Ausgleichswelle 218 axial zwischen den Ausgleichsmassen 236, 238 angeordnet. Das Zahnrad 224 ist an der Ausgleichswelle 222 axial zwischen den Ausgleichsmassen 240, 242 angeordnet. Damit ist der Antrieb der Massenausgleichseinrichtung 201 bezogen auf die Achsen der Kurbelwelle 210, der Ausgleichswelle 218 und der Ausgleichswelle 222 zumindest annähernd axial mittig angeordnet. Um Raum für den Antrieb der Massenausgleichseinrichtung 201 zu schaffen, sind die benachbarten Kurbelwangen 230, 232 vergleichsweise schmal, insbesondere schmäler, als die Kurbelwangen 228, 234, ausgeführt. Damit sind die Zylinder 202, 204 in Kurbelwellenachsrichtung zumindest nicht wesentlich weiter voneinander beabstandet, als bei einer Brennkraftmaschine mit einem stirnseitigen Antrieb einer Massenausgleichseinrichtung.

## Patentansprüche

1. Brennkraftmaschine (100, 200) mit einem ersten Zylinder (102, 202) und einem zu diesem in Reihe angeordneten zweiten Zylinder (104, 204), einer Kurbelwelle (110, 210) mit einem ersten, zwischen zwei ersten Hubwangen (128,130, 228, 230) angeordneten Hubzapfen und einem zweiten, zwischen zwei zweiten Hubwangen (132, 134, 232, 234) angeordneten Hubzapfen, wenigstens einer Nockenwelle (114, 214) sowie einer ausgehend von der Kurbelwelle (110, 210) angetriebenen Massenausgleichseinrichtung (101, 201), **dadurch gekennzeichnet, dass** der kurbelwellenseitige Antrieb der Massenausgleichseinrichtung (101, 201) zwischen den ersten Hubwangen (128, 130, 228, 230) und den zweiten Hubwangen (132, 134, 232, 234) angeordnet ist.

2. Brennkraftmaschine (100, 200) nach Anspruch 1, **dadurch gekennzeichnet, dass** die Kurbeiwelle (110, 210) eine 90°-Kröpfung aufweist, sodass der erste Hubzapfen und der zweite Hubzapfen bezüglich der Kurbelwellenachse um 90° zueinander versetzt sind, und die Massenausgleichseinrichtung (101, 201 ) eine erste Ausgleichswelle (11 B, 218) und eine zweite Ausgleichswelle (122, 222) umfasst.

3. Brennkraftmaschine (100) nach einem der vorhergehenden Ansprüche,
**dadurch gekennzeichnet, dass** die erste Ausgleichswelle (118) und die zweite Ausgleichswelle (122) gegensinnig zueinander drehen.

4. Brennkraftmaschine (200) nach einem der vorhergehenden Ansprüche,
**dadurch gekennzeichnet, dass** die erste Ausgleichswelle (218) und die zweite Ausgleichswelle (222) gleichsinnig zueinander drehen.

5. Brennkraftmaschine (100, 200) nach einem der vorhergehenden Ansprüche, **dadurch gekennzeichnet, dass** der Antrieb der Massenausgleichseinrichtung (101, 201) ein kurbeiwellenseitiges Antriebsrad (112, 212), ein der wenigstens einen Nockenwelle (114, 214) zugeordnetes Antriebsrad (116, 216), wenigstens ein der Massenausgleichseinrichtung (101, 201) zugeordnetes Antriebsrad (120, 122, 220, 222) sowie ein Zugmittel (126, 226) umfasst.

6. Brennkraftmaschine (100, 200) nach einem der vorhergehenden Ansprüche, **dadurch gekennzeichnet, dass** jeweils die dem Antrieb der Massenausgleichseinrichtung (101, 201) zugewandte Hubwange (130, 132, 230, 232) der ersten Hubwangen und der zweiten Hubwangen bezogen auf die anderen Hubwangen (128,134, 218,134) schmal ausgeführt ist.

7. Brennkraftmaschine (100, 200) nach einem der vorhergehenden Ansprüche, **dadurch gekennzeichnet, dass** die Brennkraftmaschine (100, 200) als Range Extender zur Verlängerung der Reichweite eines elektrisch betreibbaren Fahrzeugs geeignet und bestimmt ist.
